# EUROPEAN PATENT SPECIFICATION

(11) **EP 1 647 194 B1**
(45) Date of publication and mention of the grant of the patent: **02.03.2016**
(21) Application number: 04425774.9
(22) Date of filing: 14.10.2004
(51) Int. Cl.: A23G 3/20, A23G 3/28, B05C 11/08, B05C 11/06, B05C 5/02

(54) **A method and machine for forming a decorative layer on a food product**
Verfahren und Vorrichtung zum Herstellen einer dekorativen Schicht auf Lebensmitteln
Procédé et machine déposant une couche décorative sur des produits alimentaires

(43) Date of publication of application: 19.04.2006
(73) Proprietor: SOREMARTEC S.A., 2632 Findel (LU); Ferrero S.p.A., 12051 Alba (Cuneo) (IT); FERRERO OFFENE HANDELSGESELLSCHAFT m.b.H., 35260 Stadtallendorf (DE)
(72) Inventor: Cauda, Agostino, 12046 Montà D'Alba (Cuneo) (IT); Massa, Luciano, 12042 Bra (Cuneo) (IT); Sobrero, Giovanni, 12050 Cerretto Langhe (Cuneo) (IT)
(74) Representative: Rambelli, Paolo

(56) References cited:
- EP-A- 1 308 216
- WO-A-00/00034
- DE-A1- 3 416 899
- DE-U1- 20 215 244
- US-A- 4 979 463
- US-B1- 6 363 880

## Description

The present invention relates to a method for forming a decorative layer on the surface of a food item, in particular a cap of icing deposited on a convex upper surface of the said food product.

The invention was developed in particular with a view to the possible use for forming a decorative cap of a material such as glass and/or chocolate icing on food items such as pralines and the like.

Processes such as that described above are described, for example, in European Patent Application EP-A 0 554 707, in which the aforesaid cap is formed by spraying the material constituting it onto an underlying product such as a pralines, and in European Patent Application EP-A 0 680 701, in which the cap is obtained by dipping the product into a receptacle filled with the decorating material.

Such methods constitute valid alternatives to decoration carried out by methods similar to those currently in use in confectionery artisan workshop, with regard above all to the possibility of achieving high rates of production.

WO 00/00034 A discloses a machine according to the preamble to claim 6. This machine is designed to deposit and spread pizza sauce on a pizza base.

The object of the invention is therefore to provide a method of the type described above, which on the one hand makes it possible to achieve a food product with a decorating cap having a hand-crafted look, similar to that of a traditional confectionery item, while on the other hand can be used especially in the context of mass production.

The problem addressed by the invention is felt most acutely in the domain of mass production of food items, such as pralines, cream puffs or the like, in which coating with a substance in a fluid state, such as chocolate or sugar fluid, which will harden at ambient temperature, is used not only to improve taste but especially as decoration, and therefore must satisfy precise aesthetic requirements.

This problem is solved according to the invention by providing a method for forming a decorative layer on a surface of a food product, having the characteristics claimed in Claim 1. Preferred embodiments of the invention form the object of Claims 2 to 5.

According to the invention, a metered quantity of decorating material to be applied to a food item is divided into parts in such a way to obtain a plurality of deposits on the item which are distributed onto the surface thereof, and a blowing or vibrating action causes the various deposits to spread and merge together, thereby providing a cap which is irregular and random, similar to those achieved by hand.

It is clear that such a result will depend on the rheological properties of the fluid to be deposited, on the characteristics of the substrate and on the dimensions of the equipment used for the decorating process.

Another object of the invention is to provide a decorating machine for forming a decorative cap on a surface of a food product, in particular an icing cap on the convex upper surface of the said food item, having the characteristics claimed in Claim 6. Preferred embodiments of the machine form the object of Claims 7 to 20.

Further characteristics and advantages of the equipment and the method of the invention will become apparent from the detailed description which follows, provided purely by way of non-limitative example, with reference to the appended drawings, in which:
Figure 1 is a partially sectioned side elevation of a decorating machine according to the invention;
Figure 2 is an enlarged view of a detail of the machine of Figure 1, indicated by the arrow II in this drawing;
Figure 3 is a schematic plan view illustrating the operation of the machine of Figure 1; and
Figure 4 is a schematic, partially sectioned side elevation of a second embodiment of the decorating machine of the invention.

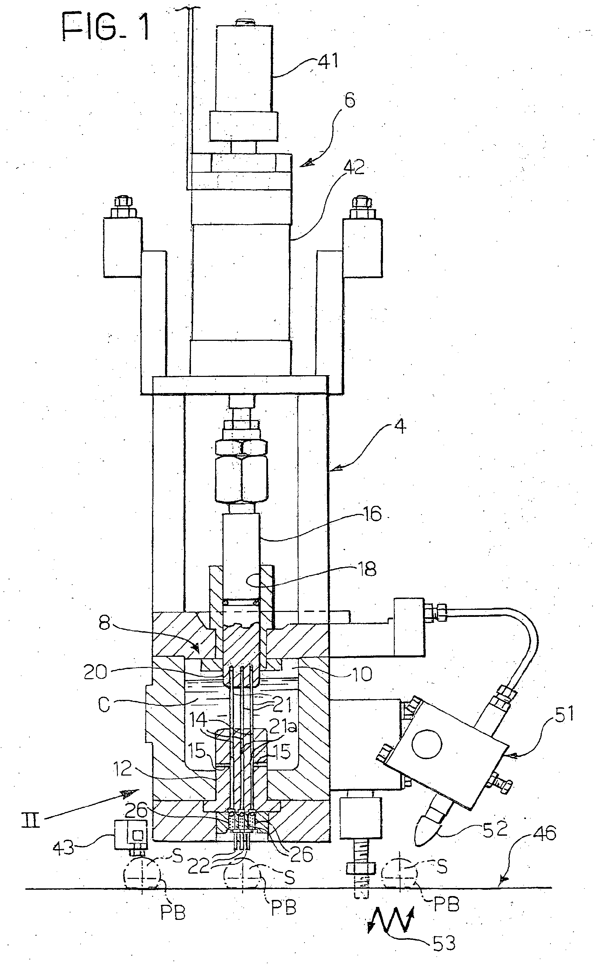

With reference to Figure 1, a decorating machine according to the invention, generally indicated 2, includes a support structure 4 bearing a drive unit 6 and a dispenser assembly 8. The support structure 4 can be constituted by a height adjustable slide, for example.

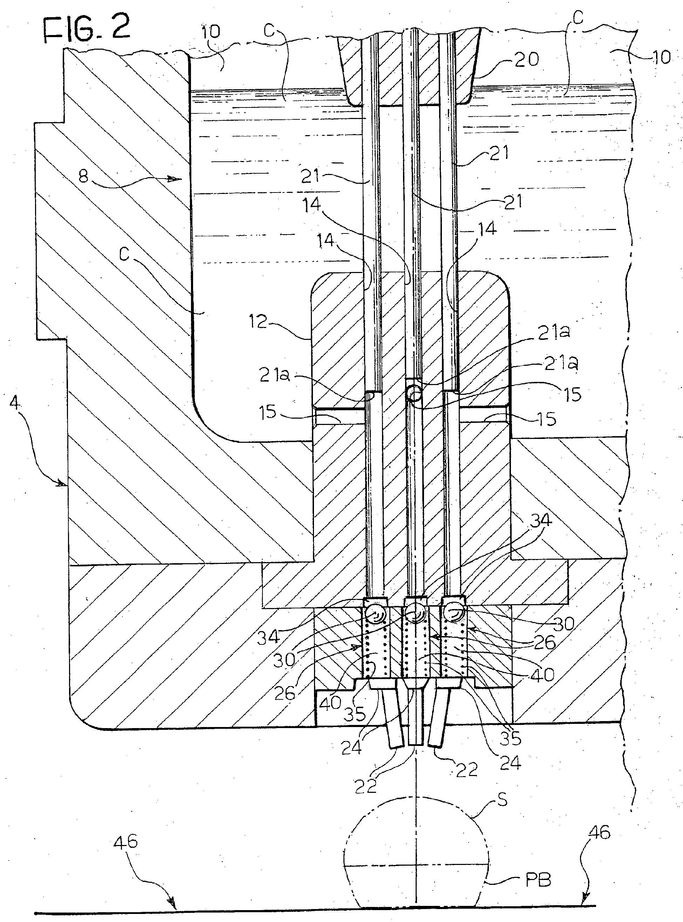

With reference now also to Figure 2, the dispenser assembly 8 includes a chamber or tank 10 into which the fluid material C to be dispensed is supplied through a supply duct (not shown), and a dispenser head 12 for depositing the material C onto a substrate or food product PB. A plurality of dispenser ducts 14 are formed parallel to each other in the dispenser head 12, in communication with the chamber 10 through respective transverse fluid intake apertures 15, each of which is arranged in a predetermined position along the corresponding dispenser duct 14. In this way, as a result of a fall in pressure (caused by the vertical return travel of needles 21 - described in more detail later - in the ducts 14), the material C to be dispensed flows from the chamber 10 into the dispenser ducts 14. It is preferable if the ducts 14 are arranged so as to have a central duct, defining an axis of symmetry, with the other ducts 14 arranged around it symmetrically. It is even more preferable if the opening 15 to the central duct 14 is arranged at a higher level than the openings to the other ducts.

A piston 16 is slidably sealingly mounted in a passage 18 in communication with the chamber 10 and positioned above the dispenser head 12. A plurality of needles 21 are fitted at one end 20 of the piston 16, aligned axially with the dispenser ducts 14, in a one to one configuration. Each needle 21 is slidably and sealingly mounted in a respective dispenser duct 14.

The piston 16 is movable, in a reciprocating linear motion, between a retracted start of stroke position, in which the ends 21a of the needles 21 are positioned in the respective dispenser ducts 14 so that the openings 15 are left open, enabling the material to be dispensed to flow through the ducts 14 (see Figures 1 and 2), and a forward end of stroke position (not shown) in which the ends 21a of the needles 21 penetrate along the respective dispenser ducts 14 for a predetermined distance between the openings 15 and the lower ends of the dispenser ducts 14.

Each dispenser duct 14 is in communication with a respective dispenser nozzle 22. Valve means, generally indicated 26, are interposed between each dispenser nozzle 22 and respective dispenser duct 14.

In operation, the valve means are movable between:
- a normal, closed position, in which they close the lower output aperture 34 of a dispenser duct 14, thereby presenting the material to be dispensed from flowing by gravity from the dispenser duct 14 to the nozzle 22; and
- an open position, in which the material to be dispensed is allowed to flow from the dispenser duct 14 to the nozzle 22.

In the example illustrated, the valve means 26 associated with each duct 14 include a valve member, for example a ball valve member 30, maintained against the output opening 34 of the dispenser duct 14 by resilient means 35, for example a coil spring. The ball valve member 30 is located in a valve chamber 40, one end of which is in fluid communication with the output opening 34 of the dispenser duct 14, and the other of which is in fluid communication with the nozzle 22.

The piston 16 is driven in a linear reciprocating motion by a drive unit 6. The motor included in the drive unit 6 can include any type of electric, pneumatic or hydraulic motor, either linear or rotary, provided that in the case of a rotary motor the assembly 6 includes means for converting the rotary motion of the shaft into the linear motion of the piston.

In the example illustrated, the motor assembly includes a monostable solenoid valve 41 and a double acting pneumatic cylinder 42. The solenoid valve 41 controls the pneumatic cylinder 42, the rod of which is fixed to the piston 16. Preferably, the cylinder 42 is of a through-rod type, with an end of the rod being housed in the solenoid valve 41. This configuration makes it possible to adjust the travel of the piston 16, and therefore of the dispenser needles 21.

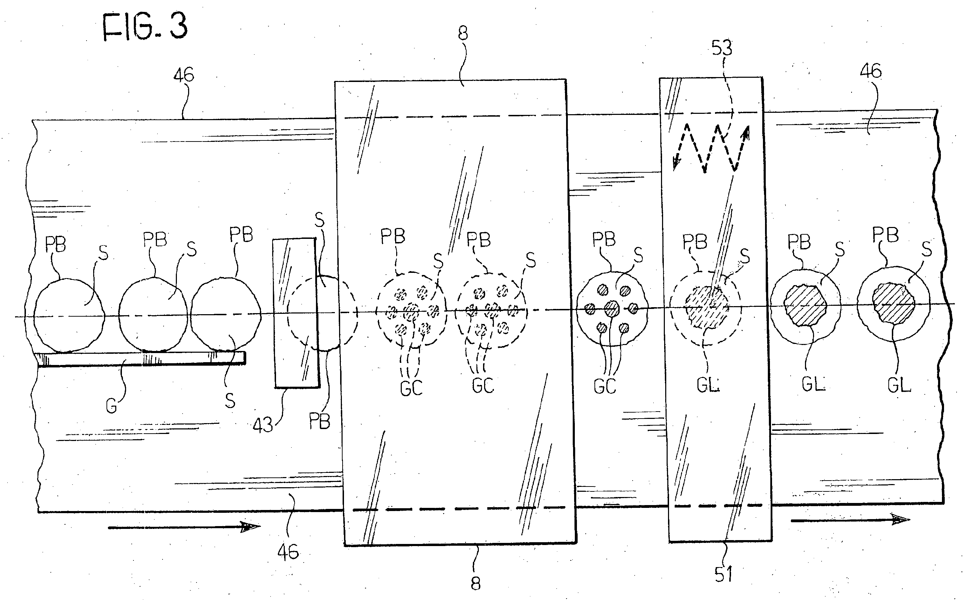

The decorating machine of the invention is intended in particular to be used in association with conveyor means, such as a conveyor 46 for example, which advances the substrate or base product PB onto which drops GC of material C (see Figure 3) are deposited, relative to the decorating machine, which is generally stationary. The conveyor 46 may be of a generic type, a belt conveyor for example (made of steel or another material), or a chain conveyor with aprons or slats, and its movement may be either continuous or intermittent and its speed either fixed or variable. In addition, the machine of the invention is especially indicated in the event of the product being made up of a plurality of separate food items, such as pralines or cream puffs with a convex upper surface S.

If case product PB comprises pralines or puffs, it is preferable if the said product PB advancing on the conveyor 46 has been first lined up, by centering guides for example (indicated G in Figure 3), into a line intended to pass under the dispenser head 12. In addition, it is preferable to provide a reader device 43 (optical fibre, photocell) for detecting the passage of a puff PB and communicating a signal to a control unit (not shown) operable to control the drive unit 6, such as a PLC provided with an encoder for measuring the instantaneous speed of the product conveyor. In this way the motor 6 can be synchronized with the arrival of the product PB and the material C can be dispensed when the product PB is directly beneath the dispenser head 12.

The decorating machine of the invention also includes a blower device 51, arranged downstream of the dispenser assembly 8 in respect of the direction of advancement of the conveyor 46. This device 51 has a nozzle 52 for blowing filtered pressurized air, the flow rate and pressure of which can be regulated, onto the surface S of the puff PB onto which drops of material C have been deposited. The orientation of the nozzle 52, that is the inclination thereof to the horizontal plane bearing the substrate PB, is adjustable in dependence on the speed of advancement of the conveyor 46, the type of product and the type of decoration required.

In a variant of the invention, the decorating machine includes a vibrator device 53 (indicated schematically in the drawings by a two-directional zig-zag arrow) positioned beneath the conveyor 46 at a region where the puff PB will pass. This vibrator device 53 is operable to impart, through the conveyor 46, a vibration to the puff PB on which drops of material C have been deposited.

In the retracted start of stroke position of the piston 16, the material C to be dispensed can flow into the dispenser ducts 14 through the inlet openings 15, while the valve means 26 - which are closed under the action exerted by each spring 35 on the respective ball valve member 30 - prevent the material from flowing through the nozzles 22.

The valve means 26 are operated in open position, as a result of the pressure exerted on each ball valve member 30 by the material to be dispensed, under the action of the needles 21 as they advance through the respective dispenser ducts 14.

In each duct 14, the material to be dispensed flows through an annular space between the ball valve member 30 and the internal surface of the valve chamber 40 in which the ball valve member 30 is located, and enters the dispenser duct 24, to be extruded through the opening of the nozzle 22.

The quantities of material C dispensed as drops GC, fall onto the surface S of the product PB in a pattern corresponding to the arrangement of the nozzles 22 of the dispenser head 12 (see Figure 3). In particular, in the preferred configuration where in a central dispenser duct 14 is provided having a the fluid intake aperture 15 positioned higher than the others, this duct dispenses a greater volume of material, whereby the central drop has a greater volume than the others.

The quantities dispensed as drops GC tend to spread on the surface S of the product PB. This tendency depends in particular on the rheological properties of the decorating material, which can be for example chocolate, chocolate surrogate, or sugar icing in a liquid state, and on the physical properties and the shape of the product PB.

An air blow directed against the product PB and coming from the blower device 51 allows to spread the deposits further, causing them to merge and form a substantially continuous cap of icing GL on the surface S at the top of the product PB (see Figure 3). In the variant illustrated earlier, vibration imparted to the product PB, by means of the vibrator device 53 via the conveyor 46 allows to spread of drops, which therefore tend to merge and form the icing cap GL. The term icing should be understood here to refer to a decorative coating made up of sugar, chocolate, chocolate surrogate or any other material normally used to decorate food products.

In its return phase, the piston 16 is returned to its start of stroke position and the valve means 26 return to the position closing the dispenser ducts 14 under the action of the valve means 35.

It will be appreciated that the method of depositing the icing and of spreading it make it possible to achieve a product that has a hand finished look, despite being manufactured industrially since, the shape of the decorative cap GL, due to the random merging of the individual drops GC is necessarily somewhat irregular and in any case differs from one puff to another. Although the method of the invention as described above is particularly suited to the decoration of products such as pralines or cream puffs, it can also be used to apply a decorative layer to a mat of bakery product, such as slices of sponge cake, for example.

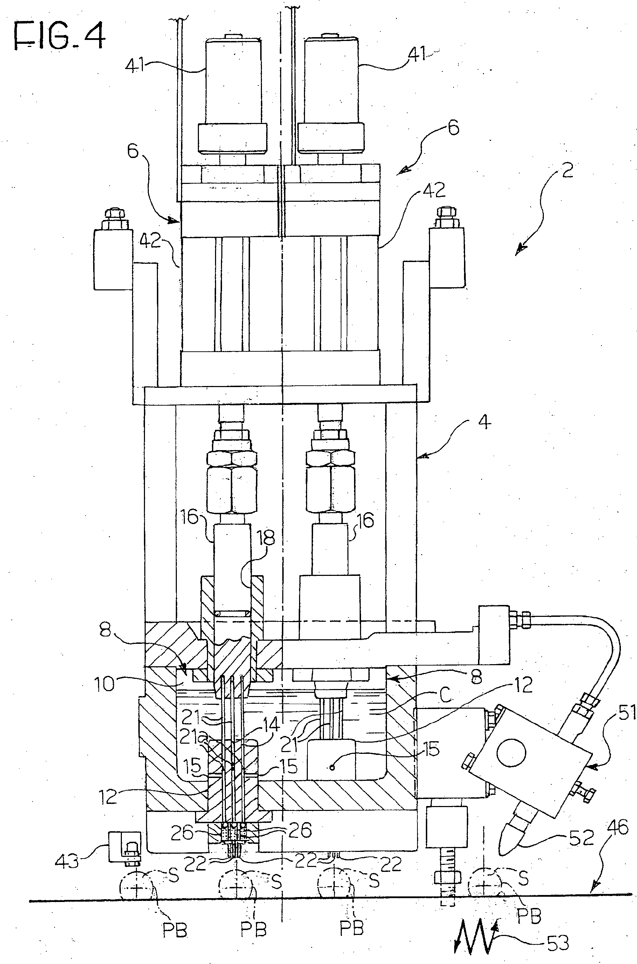

Although the embodiment of decorating machine illustrated here has a single dispenser head 12, it is clear that the machine is particularly suited to being fitted with a plurality of dispenser heads 12, arranged in a row perpendicular to the plane of the cross section of Figure 1, so as to decorate several lines of products PB transverse the path of advancement of the conveyor 46. It is also possible to provide two or more rows of dispenser heads 12, as shown in Figure 4. It will be appreciated that such embodiments of the invention would require several guides for aligning the puffs PB into several lines, each intended to pass under a respective dispenser head 12, and that each dispenser head 12 would require an associated reader device 43.

In the embodiment of Figure 4, the bottom of the chamber 10 is in communication with all the assemblies of dispenser duct 14 associated with the various dispenser heads 12 and contains a corresponding plurality of pistons 16, each controlled by a respective drive unit 6 and fitted with a plurality of needles 21.

A particular advantage of the decorating method using rows of dispenser heads 12 in communication with a single chamber 10 (as shown in Figure 4) is that the overall dimensions of the machine 2 can be fairly compact, and in any case take up less space than a plurality of separate machines each with only one dispenser head 12.

It is intended that, the principle of the invention remaining unchanged, constructional and manufacturing details may vary widely from those described and illustrated by way of non-limitative example.

In particular - as indicated above - it is intended that a preferred embodiment of the decorating machine is that in which the machine has a plurality of dispenser heads. The valve means can be modified with respect to those described providing they offer equivalent operating functionality.

## Claims

1. A method for forming a cap (GL) of decorating material capable of hardening at ambient temperature on a convex upper surface (S) of a food product (PB),
**characterised in that** it includes the following steps:
- while the said product (PB) is moving relative to the decorating machine simultaneously depositing a plurality of metered quantities in the form of drops (GC) of the said decorating material (C) in a fluid state onto the said surface (S) in portions spaced from each other across the said surface (S), and
- causing the said metered quantities (GC) to spread so as to form the said cap (GL) by means of a blowing or vibrating action.

2. A method according to Claim 1, in which the said metered quantities in the form of drops (GC) are deposited in a rotationally symmetrical pattern.

3. A method according to Claim 2, in which the said metered quantities or drops (GC) consist of one quantity deposited in a central position and a plurality of quantities deposited in peripheral positions, the said central quantity having greater volume than any of the said peripheral quantities.

4. A method according to any preceding Claim, in which the decorating material (C) is chocolate in a fluid state or a chocolate surrogate in a fluid state.

5. A method according to any Claim from 1 to 4, in which the decorating material (C) is sugar-based icing in a fluid state.

6. A decorating machine for forming a decorative layer (GL) on a surface (S) of a food product (PB), in particular a cap of icing deposited on a convex top surface of the said food product, including
- dispenser means (8, 12, 21) operable to deposit simultaneously a plurality of metered quantities in the form of drops (GC) of a decorating material (C) in a fluid state onto the said surface (S) in portions spaced from each other across the said surface(S), and
- blowing (51) or vibrating (53) means for causing the said metered quantities in the form of drops (GC) to spread so as to form a single decorative layer (GL);
**characterised in that** the said dispenser means include
- a plurality of dispenser ducts (14) in communication with a chamber (10) containing the decorating material (C); and
- valve means (26) provided downstream of the said dispenser ducts (14) which, in their normally closed position, prevent the material (C) from flowing out from the dispenser ducts (14);
said dispenser ducts (14) being close at an upstream end by respective elongate elements (21) arranged parallel to each other, each elongate element (21) being slidably and sealingly arranged in a respective duct of the said plurality of dispenser ducts (14), wherein said elongate elements (21) are arranged so as to be jointly movable in reciprocating fashion between a retracted position, in which they allow the material (C) to flow to the dispenser ducts (14) from the chamber (10), and an advanced end-of-stroke position, the movement of the elongate elements (21) between their retracted and their advanced position causing the valve means (26) to open and metered quantities of material (C) contained in each respective dispenser duct (14) to be expelled therefrom.

7. A machine according to Claim 6, including a support structure (4), and in which the said dispenser means further include
- a dispenser assembly (8) associated with the support structure (4), including the said chamber (10) containing the decorating material (C) and the said dispenser ducts (14) being arranged parallel to each other and each having a respective dispenser nozzle (22) at the end furthest from the chamber (10); and
- actuator means (6) carried on the support structure (4) for driving the elongate elements (21) in the reciprocating movement;
wherein the said valve means (26) are interposed between the said chamber (10) and the said dispenser nozzles (22); and
wherein the said elongate elements (21) are arranged parallel to each other.

8. A machine according to Claim 7, **characterised in that** the said dispenser ducts (14) communicate with the chamber (10) through respective transverse fluid-intake apertures (15), each arranged in a predetermined position along a respective dispenser duct (14).

9. A machine according to Claim 8, in which the ducts (14) are arranged with a central duct defining an axis of symmetry, and the other ducts (14) arranged around it symmetrically.

10. A machine according to Claim 9, in which the intake aperture (15) to the central duct (14) is positioned higher than the intake apertures of the other ducts.

11. A machine according to any Claim from 7 to 10, **characterised in that** the said actuator means (6) include a solenoid valve (41) and a double-acting pneumatic cylinder (42), the solenoid valve (41) being operable to control the pneumatic cylinder (42), the rod of which is fixed to the piston (16).

12. A machine according to any Claim from 6 to 11, **characterised in that** it includes associated conveyor means (46) operable to impart movement to the substrate (PB) relative to the dispenser assembly (8).

13. A machine according to any Claim from 6 to 12, **characterised in that** the said blower means (51) have a blower nozzle (52), orientated at a predetermined angle, adjustable in dependence on the speed of advancement of the product (PB), operable to blow a pressurized gas onto the product (PB) onto which the said metered quantities in the form of drops (GC) have been deposited.

14. A machine according to Claim 13, in which the said gas is air.

15. A machine according to any Claim from 6 to 12, **characterised in that** the said vibrator means (53) include a vibrator system positioned beneath means (46) for conveying the product (PB) at a region over which the product (PB) will pass.

16. A machine according to any Claim from 6 to 15, **characterised in that** the said valve means (26) include a plurality of ball valve members (30) and resilient means (35) tending to maintain each ball valve member (30) in a position closing a respective dispenser duct (14).

17. A machine according to any Claim from 6 to 16, **characterised in that** the said valve means (26) are caused to open by the pressure exerted by each elongate element (21) on the material (C) contained in each respective dispenser duct (14).

18. A machine according to any Claim from 6 to 17, **characterised in that** it includes a control unit associated with the said actuator means (6), operable to synchronize the dispensing of the material (C) with the passage of the product (PB).

19. A machine according to Claim 18, also including a reader device (43) for detecting the passage of the product (PB) and providing the control unit with a signal identifying this passage.

20. A machine according to Claim 19, in which the said reader device (43) is formed as a fibre optic device.

## Patentansprüche

1. Verfahren zur Ausbildung einer Haube (GL) aus Dekor-Material, das bei Umgebungstemperatur auf einer konvexen oberen Fläche (S) eines Lebensmittel-Produkts (PB) erhärten kann,
**dadurch gekennzeichnet, dass** das Verfahren die folgenden Schritte aufweist:
- gleichzeitiges Aufbringen mehrerer bemessener Mengen in Form von Tropfen (GC) des Dekor-Materials (C) in einem flüssigen Zustand auf die Fläche (S) in Abschnitten die voneinander über die Fläche (S) hinweg beabstandet sind, während sich das Produkt (PB) relativ zur Dekoriermaschine bewegt, und
- Bewirken, dass sich die bemessenen Mengen (GC) derart ausbreiten, dass sie die Haube (GL) ausbilden, und zwar mittels eines Aufblas- oder Vibrationsvorgangs.

2. Verfahren nach Anspruch 1, bei dem die bemessenen Mengen in der Form von Tropfen (GC) in einem rotations-symmetrischen Muster aufgebracht werden.

3. Verfahren nach Anspruch 2, bei dem die bemessenen Mengen oder Tropfen (GC) aus einer Menge, die in einer mittigen Position aufgebracht wird, und mehreren Mengen bestehen, die an Rand-Positionen aufgebracht werden, wobei die mittige Menge ein größeres Volumen als jede der Rand-Mengen aufweist.

4. Verfahren nach einem der vorhergehenden Ansprüche, bei dem das Dekor-Material (C) Schokolade in einem flüssigen Zustand oder ein Schokoladen-Ersatzstoff in einem flüssigen Zustand ist.

5. Verfahren nach einem der Ansprüche 1 bis 4, bei dem das Dekor-Material (C) Zucker-basierte Glasur in einem flüssigen Zustand ist.

6. Dekoriermaschine zur Ausbildung einer dekorativen Schicht (GL) auf einer Fläche (S) eines Lebensmittel-Produkts (PB), insbesondere einer Haube aus Glasur, die auf einer konvexen oberen Fläche des Lebensmittel-Produkts angeordnet ist, mit
- einer Ausgabeeinrichtung (8, 12, 21), die derart betätigbar ist, dass sie gleichzeitig mehrere bemessene Mengen in der Form von Tropfen (GC) eines Dekor-Materials (C) in einem flüssigen Zustand auf die Fläche (S) in Abschnitten aufbringt, die voneinander über die Fläche (S) hinweg beabstandet sind, und
- Aufblas- (51) oder Vibrations- (53) Einrichtungen zum Bewirken, dass sich die bemessenen Mengen in der Form von Tropfen (GC) derart ausbreiten, dass sie eine einzige dekorative Schicht (GL) ausbilden;
**dadurch gekennzeichnet, dass** die Ausgabeeinrichtung aufweist:
- mehrere Ausgabekanäle (14), die mit einer Kammer (10) in Verbindung stehen, die das Dekor-Material (C) enthält; und
- Ventileinrichtungen (26), die bezüglich den Ausgabekanälen (14) auslaufseitig angeordnet sind und in ihrer normalerweise geschlossenen Position das Material (C) daran hindern, aus den Ausgabekanälen (14) auszuströmen;
wobei die Ausgabekanäle (14) an einem Einlassende durch entsprechende längliche Elemente (21) geschlossen sind, die parallel zueinander angeordnet sind, wobei jedes längliche Element (21) in einem entsprechenden Kanal der mehreren Ausgabekanäle (14) verschiebbar und dichtend angeordnet ist, wobei die länglichen Elemente (21) derart angeordnet sind, dass sie zusammen auf eine vor- und zurück-bewegende Weise zwischen einer zurückgezogenen Position, bei der sie dem Material (C) gestatten, von der Kammer (10) zu den Ausgabekanälen (14) zu strömen, und einer vorgeschobenen Hub-Endposition bewegbar sind, wobei die Bewegung der länglichen Elemente (21) zwischen ihren zurückgezogenen und ihren vorgeschobenen Position bewirkt, dass die Ventileinrichtungen (26) öffnen und bemessene Mengen des Materials (C), die in jedem entsprechenden Ausgabekanal (14) enthalten sind, daraus ausgestoßen werden.

7. Maschine nach Anspruch 6, mit einer Abstützungsstruktur (4), wobei die Ausgabeeinrichtung ferner aufweist:
- eine mit der Abstützungsstruktur (4) verbundene Ausgabeanordnung (8), welche die Kammer (10) aufweist, die das Dekor-Material (C) enthält, wobei die Ausgabekanäle (14) parallel zueinander angeordnet sind und jeder eine entsprechende Ausgabedüse (22) an dem am weitesten von der Kammer (10) entfernten Ende aufweist; und
- eine auf der Abstützungsstruktur (4) getragene Betätigungseinrichtung (6) zum Antreiben der länglichen Elemente (21) in der vor- und zurück-Bewegung;
wobei die Ventileinrichtungen (26) zwischen der Kammer (10) und den Ausgabedüsen (22) angeordnet sind; und
wobei die länglichen Elemente (21) parallel zueinander angeordnet sind.

8. Maschine nach Anspruch 7, **dadurch gekennzeichnet, dass** die Ausgabekanäle (14) mit der Kammer (10) durch entsprechende transversale Fluid-Einlass-Öffnungen (15) in Verbindung stehen, die jeweils an einer vorbestimmten Position entlang eines entsprechenden Ausgabekanals (14) angeordnet sind.

9. Maschine nach Anspruch 8, bei der die Kanäle (14) einen mittigen Kanal aufweisend angeordnet sind, der eine Symmetrieachse definiert, und die anderen Kanäle (14) symmetrisch um diesen angeordnet sind.

10. Maschine nach Anspruch 9, bei der die Einlass-Öffnung (15) zum mittigen Kanal (14) höher als die Einlass-Öffnungen der anderen Kanäle angeordnet ist.

11. Maschine nach einem der Ansprüche 7 bis 10, **dadurch gekennzeichnet, dass** die Betätigungseinrichtung (6) ein Spulenventil (41) und einen doppeltwirkenden Pneumatikzylinder (42) aufweist, wobei das Spulenventil (41) derart betätigbar ist, dass es den Pneumatikzylinder (42) steuert, dessen Stange mit dem Kolben (16) verbunden ist.

12. Maschine nach einem der Ansprüche 6 bis 11, **dadurch gekennzeichnet, dass** sie eine zugehörige Fördereinrichtung (46) aufweist, die derart betätigbar ist, dass sie das Substrat (PB) relativ zur Ausgabeanordnung (8) in Bewegung versetzt.

13. Maschine nach einem der Ansprüche 6 bis 12, **dadurch gekennzeichnet, dass** die Aufblaseinrichtung (51) eine Aufblasdüse (52) aufweist, die in einem vorbestimmten Winkel ausgerichtet ist, der in Abhängigkeit der Vorschubgeschwindigkeit des Produkts (PB) einstellbar ist, welche Aufblasdüse derart betätigbar ist, dass sie auf das Produkt (PB), auf das die bemessenen Mengen in der Form von Tropfen (GC) aufgebracht wurden, ein Druckgas aufbläst.

14. Maschine nach Anspruch 13, bei der das Gas Luft ist.

15. Maschine nach einem der Ansprüche 6 bis 12, **dadurch gekennzeichnet, dass** die Vibrationseinrichtung (53) ein Vibrationssystem aufweist, das unter Einrichtungen (46) zum Fördern des Produkt (PB) an einem Bereich, über den das Produkt (PB) laufen wird, angeordnet ist.

16. Maschine nach einem der Ansprüche 6 bis 15, **dadurch gekennzeichnet, dass** die Ventileinrichtungen (26) mehrere Kugelventil-Elemente (30) und elastische Einrichtungen (35) aufweisen, die darauf gerichtet sind, dass sie jedes Kugelventil-Element (30) in einer einen entsprechenden Ausgabekanal (14) schließenden Position halten.

17. Maschine nach einem der Ansprüche 6 bis 16, **dadurch gekennzeichnet, dass** die Ventileinrichtungen (26) durch den von jedem länglichen Element (21) auf das in jedem entsprechenden Ausgabekanal (14) enthaltene Material (C) ausgeübten Druck zum Öffnen veranlasst werden.

18. Maschine nach einem der Ansprüche 6 bis 17, **dadurch gekennzeichnet, dass** sie eine mit der Betätigungseinrichtung (6) verbundene Steuereinrichtung aufweist, die derart betätigbar ist, dass sie die Ausgabe des Materials (C) mit dem Durchlauf des Produkts (PB) synchronisiert.

19. Maschine nach Anspruch 18, ferner mit einer Leseeinrichtung (43) zur Erfassung des Durchlaufs des Produkts (PB) und zum Bereitstellen eines diesen Durchlauf identifizierenden Signals an die Steuereinrichtung.

20. Maschine nach Anspruch 19, bei der die Leseeinrichtung (43) als eine Faseroptik-Einrichtung ausgebildet ist.

## Revendications

1. Procédé pour former une couverture (GL) de matériau décoratif capable de durcir à température ambiante sur une surface supérieure convexe (S) d'un produit alimentaire (PB), **caractérisé en ce qu'**il comprend les étapes suivantes :
- tandis que ledit produit (PB) se déplace par rapport à la machine à décorer, dépôt simultané de plusieurs quantités dosées en forme de gouttes (GC) dudit matériau décoratif (C) à l'état liquide sur ladite surface (S) en portions espacées les unes des autres sur toute ladite surface (S), et
- étalement desdites quantités dosées (GC) de façon à former ladite couverture (GL) au moyen d'une action de soufflage ou de vibrations.

2. Procédé selon la revendication 1, dans lequel lesdites quantités dosées en forme de gouttes (GC) sont déposées selon un motif symétrique dans le sens de la rotation.

3. Procédé selon la revendication 2, dans lequel lesdites quantités ou gouttes (GC) se composent d'une quantité déposée dans une position centrale et de plusieurs quantités déposées dans des positions périphériques, ladite quantité centrale ayant un plus grand volume que l'une quelconque desdites quantités périphériques.

4. Procédé selon l'une quelconque des revendications précédentes, dans lequel le matériau décoratif (C) est du chocolat à l'état liquide ou un substitut de chocolat à l'état liquide.

5. Procédé selon l'une quelconque des revendications 1 à 4, dans lequel le matériau décoratif (C) est un glaçage à base de sucre à l'état liquide.

6. Machine à décorer pour former une couche décorative (GL) sur une surface (S) d'un produit alimentaire (PB), en particulier une couverture de glaçage déposée sur une surface supérieure convexe dudit produit alimentaire, comprenant
- des moyens distributeurs (8, 12, 21) pouvant être actionnés de façon à déposer simultanément plusieurs quantités dosées en forme de gouttes (GC) d'un matériau décoratif (C) dans un état liquide sur ladite surface (S) en portions espacées les une des autres sur toute ladite surface (S), et
- des moyens soufflants (51) ou vibrants (53) pour étaler lesdites quantités dosées en forme de gouttes (GC) afin de former une seule et même couche décorative (GL) ;
**caractérisée en ce que** lesdits moyens distributeurs comprennent
- plusieurs conduites de distribution (14) communiquant avec une chambre (10) qui contient le matériau décoratif (C) et
- des moyens formant vannes (26) prévus en aval desdites conduites de distribution (14) et qui, dans leur position normalement fermée, empêchent le matériau (C) de s'écouler hors des conduites de distribution (14) ;
lesdites conduites de distribution (14) étant fermées à une extrémité d'amont par des éléments allongés correspondants (21) disposés parallèlement les uns aux autres, chaque élément allongé (21) étant disposé de façon coulissante et hermétique dans une conduite respective parmi lesdites plusieurs conduites de distribution (14), lesdits éléments allongés (21) étant disposés de façon à pouvoir se déplacer ensemble de façon alternative entre une position rétractée, dans laquelle ils laissent le matériau (C) s'écouler vers les conduites de distribution (14) à partir de la chambre (10), et une position de fin de course avancée, le mouvement des éléments allongés (21) entre leur position rétractée et leur position avancée provoquant l'ouverture des moyens formant vannes (26) et l'expulsion par celles-ci de quantités dosées de matériau (C) contenu dans chaque conduite de distribution (14) respective.

7. Machine selon la revendication 6, comprenant une structure de support (4) et dans laquelle lesdits moyens distributeurs comprennent en outre
- un assemblage distributeur (8) associé à la structure de support (4), incluant ladite chambre (10) qui contient le matériau décoratif (C) et les conduites de distribution (14) disposées parallèlement les unes aux autres et ayant chacune une buse de distribution (22) correspondante à l'extrémité la plus éloignée de la chambre (10) ; et
- des moyens d'actionnement (6) portés sur la structure de support (4) afin d'entraîner les éléments allongés (21) dans le mouvement alternatif ;
dans laquelle lesdits moyens formant vannes (26) sont interposés entre ladite chambre (10) et lesdites buses de distribution (22) ; et
dans laquelle lesdits éléments allongés (21) sont disposés parallèlement les uns aux autres.

8. Machine selon la revendication 7, **caractérisée en ce que** lesdites conduites de distribution (14) communiquent avec la chambre (10) à travers des ouvertures transversales d'entrée de liquide (15) disposées chacune dans une position prédéterminée le long d'une conduite de distribution (14) correspondante.

9. Machine selon la revendication 8, dans laquelle les conduites (14) sont disposées avec une conduite centrale formant un axe de symétrie et les autres conduites (14) disposées autour d'elle de façon symétrique.

10. Machine selon la revendication 9, dans laquelle l'ouverture d'entrée (15) vers la conduite centrale (14) est placée plus haut que les ouvertures d'entrée des autres conduites.

11. Machine selon l'une quelconque des revendications 7 à 10, **caractérisée en ce que** lesdits moyens d'actionnement (6) comprennent une électrovanne (41) et un vérin pneumatique à double action (42), l'électrovanne (41) pouvant être actionnée de façon à commander le vérin pneumatique (42) dont la tige est fixée au piston (16).

12. Machine selon l'une quelconque des revendications 6 à 11, **caractérisée en ce qu'**elle comprend des moyens convoyeurs (46) associés pouvant être actionnés pour imprimer un mouvement au substrat (PB) par rapport à l'assemblage distributeur (8).

13. Machine selon l'une quelconque des revendications 6 à 12, **caractérisée en ce que** lesdits moyens soufflants (51) possèdent une buse de soufflante (52) orientée selon un angle prédéterminé, réglable en fonction de la vitesse d'avancement du produit (PB), qui peut être actionnée en vue de souffler un gaz sous pression sur le produit (PB) sur lequel lesdites quantités dosées en forme de gouttes (GC) ont été déposées.

14. Machine selon la revendication 13, dans laquelle ledit gaz est de l'air.

15. Machine selon l'une quelconque des revendications 6 à 12, **caractérisée en ce que** lesdits moyens vibrants (53) comprennent un système de vibrateur placé en dessous desdits moyens (46) pour convoyer le produit (PB) dans une région au-dessus de laquelle le produit (PB) va passer.

16. Machine selon l'une quelconque des revendications 6 à 15, **caractérisée en ce que** lesdits moyens formant vannes (26) comprennent plusieurs éléments de vanne à boisseau sphérique (30) et des moyens élastiques (35) qui tendent à maintenir chaque élément de vanne à boisseau sphérique (30) dans une position qui ferme la conduite de distribution (14) correspondante.

17. Machine selon l'une quelconque des revendications 6 à 16, **caractérisée en ce que** lesdits moyens formant vannes (26) sont ouverts par la pression exercée par chaque élément allongé (21) sur le matériau (C) contenu dans chaque conduite de distribution (14) correspondante.

18. Machine selon l'une quelconque des revendications 6 à 17, **caractérisée en ce qu'**elle comprend une unité de commande associée auxdits moyens d'actionnement (6), pouvant être actionnée pour synchroniser la distribution du matériau (C) avec le passage du produit (PB).

19. Machine selon la revendication 18, comprenant également un dispositif de lecteur (43) pour détecter le passage du produit (PB) et fournir à l'unité de commande un signal identifiant ce passage.

20. Machine selon la revendication 19, dans laquelle ledit dispositif de lecteur (43) est réalisé comme un dispositif à fibres optiques.
